(19) Europäisches Patentamt
European Patent Office
Office européen des brevets

(11) **EP 2 128 570 A1**

(12) **EUROPÄISCHE PATENTANMELDUNG**

(43) Veröffentlichungstag:
**02.12.2009 Patentblatt 2009/49**

(51) Int Cl.:
***G01D 5/244*** (2006.01)

(21) Anmeldenummer: **08009649.8**

(22) Anmeldetag: **27.05.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(71) Anmelder: **SIEMENS AKTIENGESELLSCHAFT
80333 München (DE)**

(72) Erfinder: **Finkler, Roland
91058 Erlangen (DE)**

(54) **Verwendung einer Messsignalauswertung einer Lagemesseinrichtung zur Ermittlung der zeitlichen Differenz zwischen einem ersten Ereignis und einem zweiten Ereignis**

(57) Verwendung einer Messsignalauswertung einer Lagemesseinrichtung zur Ermittelung der zeitlichen Differenz zwischen einem ersten Ereignis und einem zweiten Ereignis

Die Erfindung betrifft Verwendung einer Messsignalauswertung (3) einer Lagemesseinrichtung zur Ermittelung der zeitlichen Differenz (T) zwischen einem ersten Ereignis (A) und einem zweiten Ereignis (B), wobei aus einem einzelnen oder mehreren periodischen Signalen $((x_1(t),x_2(t))$ Lagewerte ermittelt werden, wobei bei Eintritt eines ersten Ereignisses (A) ein erster Lagewert $(\varphi_A)$ mittels der Messsignalauswertung (3) ermittelt wird und bei Eintritt des zweiten Ereignisses (B) ein zweiter Lagewert $(\varphi_B)$ mittels der Messsignalauswertung (3) ermittelt wird, wobei mittels des ersten und des zweiten Lagewerts $(\varphi_A, \varphi_B)$ die zeitliche Differenz (T) ermittelt wird. Weiterhin betrifft die Erfindung ein diesbezügliches Lagemesssystem. Die Erfindung ermöglicht die zeitliche Differenz zwischen zwei Ereignissen mit einer hohen zeitlichen Auflösung zu messen, wobei durch die Zeitmessung bedingte elektromagnetische Störungen reduziert werden.

## FIG 1

EP 2 128 570 A1

**Beschreibung**

Die Erfindung betrifft eine Messsignalauswertung einer Lagemesseinrichtung.

Bei technischen Systemen, insbesondere in der Automatisierungstechnik, muss häufig für die verschiedensten Aufgaben sehr genau die Zeitdifferenz zwischen dem Eintritt von zwei Ereignissen ermittelt werden. Hierzu wird üblicherweise ein von einem Taktgenerator erzeugtes periodisches Rechteckimpulssignal verwendet. Die zeitliche Differenz zwischen beiden Ereignissen wird bei handelsüblichen Systemen aus der Anzahl der Rechteckimpulse ermittelt, die zwischen den beiden Ereignissen liegen.

Die Auflösung der zeitlichen Differenz zwischen zwei Ereignissen ist somit durch die Frequenz mit der die Rechteckimpulse vom Taktgenerator erzeugt werden, begrenzt. Je höher die zeitliche Auflösung der ermittelten zeitlichen Differenz sein soll, je höher muss die Frequenz des Rechteckimpulssignals gewählt werden. Soll eine sehr hohe Auflösung erzielt werden, muss die Frequenz des Rechteckimpulssignals entsprechend hoch gewählt werden, d.h. heißt die Rechteckimpulse folgen in sehr kurzen zeitlichen Abständen aufeinander. Rechteckimpulssignale mit hoher Frequenz, erzeugen aber elektromagnetische Störungen, die insbesondere bei in der Nähe angeordneten elektrischen Bauteilen, zu Fehlfunktionen führen können.

Übliche Taktfrequenzen, die z.B. verwendet werden, liegen in einem Bereich von 100 MHz und höher. Es ist in diesem Zusammenhang denkbar, über mehrere logische Gatter mehrere zueinander verzögerte Taktsignale auszuwerten, um eine Erhöhung der zeitlichen Auflösung zu erreichen. Hierbei ist jedoch eine sehr hohe Anzahl von Verzögerungsgliedern notwendig.

Weiterhin kann über die Abtastung einer linear ansteigenden Spannung, z.B. mittels Abtastung der Spannung an einem Kondensator der über eine Stromquelle aufgeladen wird, die zeitliche Differenz zwischen zwei Ereignissen gemessen werden. Eine solche zeitliche Messung ist jedoch relativ ungenau.

Es ist Aufgabe der Erfindung die Messung der zeitlichen Differenz zwischen zwei Ereignissen mit hoher zeitlicher Auflösung zu messen, wobei durch die Zeitmessung bedingte elektromagnetische Störungen reduziert werden.

Diese Aufgabe wird gelöst durch die Verwendung einer Messsignalauswertung einer Lagemesseinrichtung zur Ermittelung der zeitlichen Differenz zwischen einem ersten Ereignis und einem zweiten Ereignis, wobei aus einem einzelnen oder mehreren periodischen Signalen Lagewerte ermittelt werden, wobei bei Eintritt eines ersten Ereignisses ein erster Lagewert mittels der Messsignalauswertung ermittelt wird und bei Eintritt des zweiten Ereignisses ein zweiter Lagewert mittels der Messsignalauswertung ermittelt wird, wobei mittels des ersten und des zweiten Lagewerts die zeitliche Differenz ermittelt wird.

Weiterhin wird diese Aufgabe gelöst durch ein Lagemesssystem, wobei das Lagemesssystem eine Messsignalauswertung zur Ermittelung der zeitlichen Differenz zwischen einem ersten Ereignis und einem zweiten Ereignis aufweist, wobei aus einem einzelnen oder mehreren periodischen Signalen Lagewerte ermittelbar sind, wobei bei Eintritt eines ersten Ereignisses ein erster Lagewert mittels der Messsignalauswertung ermittelbar ist und bei Eintritt des zweiten Ereignisses ein zweiter Lagewert mittels der Messsignalauswertung ermittelbar ist, wobei mittels des ersten und des zweiten Lagewerts die zeitliche Differenz ermittelbar ist.

Vorteilhafte Ausbildungen der Erfindung ergeben sich aus den abhängigen Ansprüchen. Vorteilhafte Ausbildungen der Verwendung ergeben sich analog zu vorteilhaften Ausbildungen des Lagermesssystems und umgekehrt.

Es erweist sich als vorteilhaft, wenn die zeitliche Differenz ermittelt wird, indem die Lagedifferenz zwischen dem erstem Lagewert und dem zweitem Lagewert ermittelt wird und die Lagedifferenz mit einem Proportionalitätsfaktor gewichtet wird. Hierdurch wird eine einfache Ermittlung der zeitlichen Differenz gewährleistet.

Ferner erweist es sich als vorteilhaft, wenn das periodische Signal mittels eines dem periodischen Signal zugeordneten Signalgenerators erzeugt wird oder die periodischen Signale mittels den periodischen Signalen zugeordneter Signalgeneratoren erzeugt werden. Hierdurch können das periodische Signal oder die periodischen Signale auf besonders einfache Art und Weise erzeugt werden.

Ferner erweist es sich als vorteilhaft, wenn das periodische Signal oder die periodischen Signale ausschließlich bei Eintritt des ersten und Eintritt des zweiten Ereignisses, zur Erzeugung von Eingangswerten für die Messsignalauswertung, abgetastet werden. Hierdurch wird eine einfache Verwendung der Messsignalauswertung ermöglicht.

Ferner erweist es sich als vorteilhaft, wenn die solchermaßen ermittelte zeitliche Differenz zur Bestimmung der Lage eines beweglichen Magneten bei einer magnetostriktiven Lagemesseinrichtung verwendet wird. Insbesondere bei magnetostriktiven Lagemesseinrichtungen ist eine hohe zeitliche Auflösung erforderlich.

Ein Ausführungsbeispiel der Erfindung ist in der Zeichnung dargestellt und wird im Folgenden näher erläutert. Dabei zeigen:

FIG 1    ein Ausführungsbeispiel der Erfindung,
FIG 2    zwei periodische Signale,
FIG 3    eine schematisierte Darstellung eines handelsüblichen magnetostriktiven Lagemesssystems,
FIG 4    die Ermittlung einer Lage aus der ermittelten zeitlichen Differenz und

FIG 5    ein weiteres Ausführungsbeispiel der Erfindung

Bei handelsüblichen Lagemesseinrichtungen zur Messung einer Lage d.h. einer Position, z.B. eines bewegbaren Maschinenelements wie z.B. einer Motorwelle, tasten in der Regel zwei Signalgeber eine bewegbare Maßverkörperung ab und erzeugen entsprechend der auf der Maßverkörperung angeordneten Maßeinteilung periodische Signale, aus denen mit Hilfe einer Messsignalauswertung die aktuelle Lage des Maschinenelements bestimmt wird.

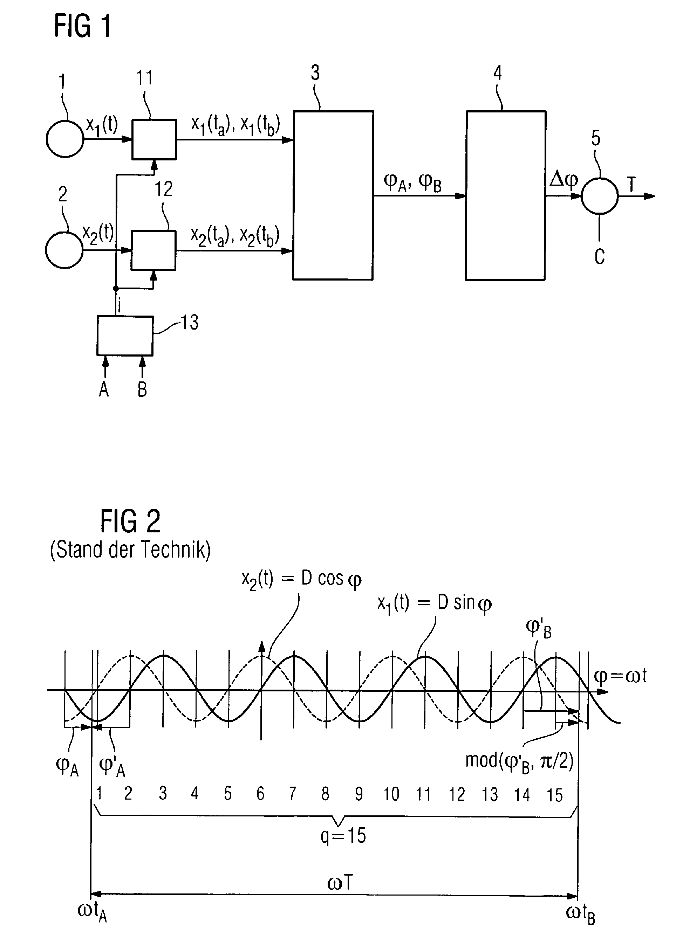

In der DE 10 2004 038 621 B3 ist eine solche Lagemesseinrichtung beschrieben, bei der aus zwei sinusförmigen zueinander phasenversetzten Signale mittels einer Messsignalauswertung eine Lage $\varphi_{cc}$ ermittelt wird. Gemäß FIG 1 der DE 10 2004 038 621 B3 und der zugehörigen Beschreibung tasten die beiden Signalgeber 1 und 2 die in FIG 1 der DE 10 2004 038 621 B3 dargestellte Maßteilung der Maßverkörperung ab und geben die beiden sinusförmigen zueinander phasenversetzten Messsignale x und y aus. Die beiden Messsignale x und y werden anschließend mittels zweier Analog-Digital-Wandler in einem festen Zeitraster abgetastet. Aus den beiden solchermaßen digitalisierten Messsignalen x und y wird von der in FIG 1 der DE 10 2004 038 621 B3 dargestellten nachgeschalteten Messsignalauswertung das Lagesignal $\varphi_{cc}$ ermittelt. Die Messsignalauswertung gemäß FIG 1 der DE 10 2004 038 621 B3 führt dabei zunächst eingangsseitig eine Analog-Digital-Wandlung der Messsignale x und y aus und gibt ausgangsseitig das von ihr ermittelte Lagesignal $\varphi_{cc}$ aus. Die in FIG 1 und der zugehörigen Beschreibung der DE 10 2004 038 621 B3 beschriebene Messsignalauswertung stellt dabei nur eine mögliche Messsignalauswertung einer Lagemesseinrichtung dar. Handelsübliche Lagemesseinrichtungen weisen in der Regel alle eine Messsignalauswertung auf, die aus zwei oder mehr Messsignalen ein Lagesignal d.h. eine Lage ermittelt.

In der DE 27 29 697 A1 ist z.B. eine weitere Messsignalauswertung einer Lagemesseinrichtung offenbart, die aus zwei Messsignalen ein Lagesignal bestimmt. Dabei beinhalten solche handelsüblichen Messeinrichtungen oft auch noch um die Genauigkeit zu erhöhen, z.B. spezielle Verfahren zur Kompensation und/ oder Korrektur von Offset-, Amplituden-, Phasen- und harmonischen Fehlern der Messsignale um die Genauigkeit der ermittelten Lage zu erhöhen.

Weiterhin sind auch Verfahren bekannt, bei denen z.B. die Maßverkörperung nicht nur an zwei versetzten Stellen sondern an mindestens drei versetzten Stellen abgetastet werden um die Genauigkeit der ermittelten Lage zu erhöhen. So ist aus der Veröffentlichung "Verfahren und Vorrichtung zur Positionsmessung mit mehr als zwei Sensoren", Dr. Roland Finkler, Dr. Hans-Georg Köpken, www.priorartdatabase.com/IPCOM/000035541/ z.B. ein Verfahren und eine Vorrichtung bekannt, bei der aus mehr als zwei Messsignalen ein Lagesignal ermittelt wird.

Solche aus dem Stand der Technik bekannten Messsignalauswertungen von Lagemesseinrichtungen weisen die Eigenschaft auf, dass sie aus relativ niederfrequenten Messsignalen mit sehr hoher Genauigkeit eine entsprechende Lage ermitteln, d.h. ein entsprechendes Lagesignal ermitteln.

Erfindungsgemäß wird eine solche handelsüblich bekannte Messsignalauswertung dazu verwendet, die zeitliche Differenz zwischen einem ersten Ereignis und einem zweiten Ereignis zu ermitteln.

In FIG 1 der vorliegenden Anmeldung ist dabei in Form einer schematisierten Darstellung ein Ausführungsbeispiel der Erfindung dargestellt. Ein erster Signalgenerator 1 erzeugt ein erstes periodisches Signal $x_1(t)$ und ein zweiter Signalgenerator 2 erzeugt ein zweites periodisches Signal $x_2(t)$. Im Rahmen des Ausführungsbeispiels sind die beiden Signale $x_1(t)$ und $x_2(t)$ sinusförmig und gegeneinander zeitlich versetzt. Die beiden Signale können aber auch andere nicht sinusförmige Signalformen aufweisen. Auch brauchen die beiden Signale nicht unbedingt die gleiche Signalform aufweisen. Vorzugsweise sollten sie aber eine nicht rechteckförmige Signalform aufweisen.

Die beiden Signale $x_1(t)$ und $x_2(t)$ werden als Eingangsgröße den jeweilig zugehörigen Analog-Digital-Wandlern 11 und 12 zugeführt. Bei Einritt eines ersten Ereignisses A und bei Eintritt eines zweiten Ereignisses B wird am Ausgang eines logischen ODER-Gatters 13, jeweils ein Tastimpuls i erzeugt, der die beiden Analog-Digitalwandlern 11 und 12 dazu veranlasst jeweils eine einmalige Abtastung der analogen Signale $x_1(t)$ und $x_2(t)$ durchzuführen. Der Eintritt des ersten Ereignisses A und des zweiten Ereignisses B wird dabei dem ODER-Gatters 13 in Form eines jeweiligen Triggerimpulses als Eingangsgröße zugeführt. Die beiden Analog-Digital-Wandler 11 und 12 erzeugen solchermaßen die zum Zeitpunkt $t_a$ des Einritts des ersten Ereignisses A abgetasteten Signalwerte $x_1(t_a)$ und $x_2(t_a)$ und die zum Zeitpunkt $t_b$ des Einritts des zweiten Ereignisses B abgetasteten Signalwerte $x_1(t_b)$ und $x_2(t_b)$. Die Signalwerte $x_1(t_a)$ und $x_2(t_a)$ sowie die Signalwerte $x_1(t_b)$ und $x_2(t_b)$ werden im Folgenden einer aus dem Stand der Technik bekannten Messsignalauswertung 3 als Eingangswerte, welche die schon beschriebene Messsignalauswertung durchführt, zugeführt.

Die Messsignalauswertungseinheit 3 ermittelt ausgangsseitig aus den beiden Signalwerten $x_1(t_a)$ und $x_2(t_a)$ einen Lagewert $\varphi_A$ und aus den beiden Signalwerte $x_1(t_b)$ und $x_2(t_b)$ einen Lagewert $\varphi_B$. Die Messsignalauswertung, welche in der Messsignalauswertungseinheit 3 durchgeführt wird, stimmt dabei z.B. mit der in FIG 1 und der zugehörigen Beschreibung offenbarten Messsignalauswertung der DE 10 2004 038 621 B3 überein. Erfindungsgemäß werden dabei die in FIG 1 der DE 10 2004 038 621 B3 offenbarten beiden Signalgeber 1 und 2 und die Maßverkörperung durch die beiden in FIG 1 der vorliegenden Anmeldung angegebenen ersten und zweiten Signalgenerator 1 und 2 ersetzt und die beiden Analog-Digital-Wandler derart angesteuert, dass diese nicht mehr in einem festen Zeitraster (z.B. alle 0,125 ms) die Signale abtasten, sondern nur noch einmalig bei Einritt des ersten Ereignisses A und einmalig bei Einritt des ersten Ereignisses zweiten Ereignisses B. Die beiden Signalgeneratoren erzeugen dabei periodische Signale mit stets konstanter Periodendauer und folglich stets konstanter Frequenz. Das Lagewerte $\varphi_A$ und $\varphi_B$ in FIG 1 der vorliegenden Anmeldung entsprechen dabei einzelnen Werten des Lagesignals $\varphi_{CC}$ gemäß FIG 1 der DE 10 2004 038 621 B3. Alternativ könnte natürlich auch die Messsignalauswertung in Form der in der DE 27 29 697 A1 beschriebene Messsignalauswertung realisiert sein. Es kann dabei, wie schon gesagt, im Prinzip jede aus dem Stand der Technik bekannte Messsignalauswertung von Lagemesseinrichtungen zur Realisierung der Erfindung verwendet werden, wobei die Signalgeneratoren auf die jeweilig verwendete Messsignalauswertung angepasste Signale erzeugen müssen, die die jeweilig verwendete Messsignalauswertung verarbeiten kann.

Die solchermaßen ermittelten Lagewerte $\varphi_A$ und $\varphi_B$ werden dabei, wie in FIG 1 dargestellt, in einem nächstfolgenden Schritt als Eingangsgröße einer Lagedifferenzermittlungseinheit 4 zugeführt. Die Lagedifferenzermittlungseinheit 4 berechnet anschließend die Lagedifferenz $\Delta\varphi$ zwischen dem ersten und zweiten Lagewert, indem im Rahmen des Ausführungsbeispiels der erste Lagewert $\varphi_A$ vom zweiten Lagewert $\varphi_b$ gemäß der Beziehung

$$\Delta\varphi \ = \ \varphi_B - \varphi_A$$

subtrahiert wird.

Ausgangsseitig gibt die Lagedifferenzermittlungseinheit 4 die solchermaßen ermittelte Lagedifferenz $\Delta\varphi$ im Rahmen des Ausführungsbeispiels an einen Multiplizierer 5 aus, der eine Wichtung der Lagedifferenz $\Delta\varphi$ durchführt, indem er diese im Rahmen des Ausführungsbeispiels mit einem Proportionalitätsfaktor C multipliziert. Der Proportionalitätsfaktor C hängt von der Frequenz f der periodischen Signale $x_1(t)$ und $x_2(t)$ ab und ergibt sich unter der Voraussetzung, dass die beiden Signale $x_1(t)$ und $x_2(t)$ die gleiche Frequenz f aufweisen und sinusförmig und zueinander zeitlich versetzt sind z.B. zu:

$$C = \frac{1}{\omega}$$

mit

$$\omega = 2\pi f$$

Mit Hilfe der solchermaßen durchgeführten Wichtung in Form einer Multiplikation mit dem Proportionalitätsfaktor C wird die ermittelte Lagedifferenz $\Delta\varphi$ in eine entsprechende zeitliche Differenz T umgerechnet und am Ausgang des Multiplizierers 5 ausgegeben. Die solchermaßen ermittelte zeitliche Differenz T kann dann entsprechend den jeweiligen technischen Erfordernissen beliebig weiterverarbeitet werden.

Der Vollständigkeit halber ist in FIG 2 noch einmal beispielhaft eine einfache allgemein bekannte Realisierung der Funktionalität der Messsignalauswertungseinheit 3 dargestellt, wobei die beiden periodischen Signale $x_1(t)$ und $x_2(t)$ nicht über der Zeit t sondern über der Lage, die im Rahmen des Ausführungsbeispiels durch den Winkel

$$\varphi = \omega t$$

gegeben ist, aufgetragen sind. Die beiden periodischen Signale $x_1(t)$ und $x_2(t)$ sind dabei gegeben durch

$$x_1(t) \ = \ D \ \sin(\omega \cdot t), \ \ x_2(t) \ = \ D \ \cos(\omega \cdot t)$$

D: Amplitude

Bei Eintritt des Ereignisses A zum Zeitpunkt $t_A$ werden die beiden Signalwerte

$$x_1(t_A) = D \sin(\omega \cdot t_A)$$

und

$$x_2(t_A) = D \cos(\omega \cdot t_A)$$

und bei Eintritt des Ereignisses B zum Zeitpunkt $t_B$ werden die beiden Signalwerte

$$x_1(t_B) = D \sin(\omega \cdot t_B)$$

und

$$x_2(t_B) = D \cos(\omega \cdot t_B)$$

erfasst.

Zunächst wird aus den auf Grund des Ereignisses A erfassten Signalwerten

$$\varphi'_A = \mathrm{atan2}(x_1(t_A), x_2(t_A)) = \arg(x_2(t_A) + j\ x_1(t_A))$$

berechnet, wobei atan2(b, a) und arg(a + j b) das Argument der komplexen Zahl a + j b mit $-\pi \leq \arg(a + j\ b) \leq \pi$ bedeuten

$$(\text{d.h. } a + j\ b = |a + j\ b|\ e^{j\ \arg(a + j\ b)})$$

Danach wird

$$\varphi_A = \mathrm{mod}(\varphi'_A, \pi/2)$$ berechnet, wobei mod() die Modulofunktion ist.

Entsprechend werden aus den auf Grund des Ereignisses B erfassten Signalwerten

$$\varphi'_B = \mathrm{atan2}(x_1(t_B), x_2(t_B)) = \arg(x_2(t_B) + j\ x_1(t_B))$$

berechnet.

Zwischen den Ereignissen A und B wird außerdem die Zahl q der Nulldurchgänge der Signale $x_1(t)$ und $x_2(t)$ ermittelt. Anschließend wird q um 1 erhöht, falls der erste gezählte Nulldurchgang
im Falle $-\pi \leq \varphi'_A < -n/2$ ein positiver Nulldurchgang von $x_1(t)$ war,
im Falle $-\pi/2 \leq \varphi'_A < 0$ ein negativer Nulldurchgang von $x_2(t)$ war,
im Falle $0 \leq \varphi'_A < n/2$ ein negativer Nulldurchgang von $x_1(t)$ war bzw.
im Falle $\pi/2 \leq \varphi'_A < \pi$ ein positiver Nulldurchgang von $x_2(t)$ war,
dagegen wird q um 1 erniedrigt, falls der erste gezählte Nulldurchgang
im Falle $-\pi \leq \varphi'_A < -\pi/2$ ein negativer Nulldurchgang von $x_1(t)$ war,
im Falle $-\pi/2 \leq \varphi'_A < 0$ ein positiver Nulldurchgang von $x_2(t)$ war,
im Falle $0 \leq \varphi'_A < \pi/2$ ein positiver Nulldurchgang von $x_1(t)$ war bzw.
im Falle $\pi/2 \leq \varphi'_A < \pi$ ein negativer Nulldurchgang von $x_2(t)$ war.

Anschließend wird nochmals q um 1 erhöht, falls der letzte gezählte Nulldurchgang
für $-\pi \leq \varphi'_B < -\pi/2$ ein negativer Nulldurchgang von $x_2(t)$ war,

für $-\leq/2 \leq \varphi'_B < 0$ ein negativer Nulldurchgang von $x_1(t)$ war,
für $0 \leq \varphi'_B < \pi/2$ ein positiver Nulldurchgang von $x_2(t)$ war oder
für $\pi/2 \leq \varphi'_B < \pi$ ein positiver Nulldurchgang von $x_1(t)$ war,
dagegen um 1 erniedrigt, falls der letzte gezählte Nulldurchgang
für $-\pi \leq \varphi'_B < -\pi/2$ ein positiver Nulldurchgang von $x_2(t)$ war,
für $-\pi/2 \leq \varphi'_B < 0$ ein positiver Nulldurchgang von $x_1(t)$ war,
für $0 \leq \varphi'_B < \pi/2$ ein negativer Nulldurchgang von $x_2(t)$ war oder
für $\pi/2 \leq \varphi'_B < \pi$ ein negativer Nulldurchgang von $x_1(t)$ war.

Damit gibt q - 1 die Anzahl der zwischen den Ereignissen A und B vollständig durchlaufenen Quadranten der Signale $x_1(t)$, $x_2(t)$ an. Die eventuellen Korrekturen um +1 oder -1 entsprechend dem ersten bzw. letzten gezählten Nulldurchgang sind dabei nötig, weil es auf Grund von Messungenauigkeiten zu Inkonsistenzen sowohl zwischen dem ersten gezählten Nulldurchgang und dem für $\varphi_A$ ermittelten Quadranten als auch zwischen dem letzten gezählten Nulldurchgang und dem für $\varphi'_B$ ermittelten Quadranten kommen kann.

In der DE 27 29 697 A1 wird statt der oben beschriebenen Ermittlung von q ein Richtungsdiskriminator und ein elektronischer Vor-/Rückwärtszähler benutzt, weil dort nicht von einem mit konstanter Winkelgeschwindigkeit rotierenden sin/cos-Geber ausgegangen wird, sondern auch mit Drehrichtungsänderungen gerechnet werden muss.

Danach wird

$$\varphi_B = q \cdot \pi/2 + \mathrm{mod}(\varphi'_B, \pi/2)$$

berechnet.

Die Lagedifferenz ergibt sich dann zu

$$\Delta\varphi = \varphi_B - \varphi_A$$

und wird am Ausgang der Lagedifferenzermittelungseinheit 4 ausgeben.

Die zeitliche Differenz T ergibt sich dann zu

$$T = C \cdot \Delta\varphi = \frac{1}{\omega}(\varphi_B - \varphi_A),$$

wobei die Umsetzung der oben stehenden Beziehung im Multiplizierer 5 erfolgt.

Besonders vorteilhaft lässt sich die Erfindung bei Lagemesssystemen zur Messung einer Lage, wie z.B. bei magnetostriktiven Lagemesssystemen verwenden, bei denen zur Ermittlung einer Lage eine genaue Ermittlung der zeitlichen Differenz zwischen zwei Ereignissen, die in einem kurzen Zeitraum hintereinander auftreten, notwendig ist.

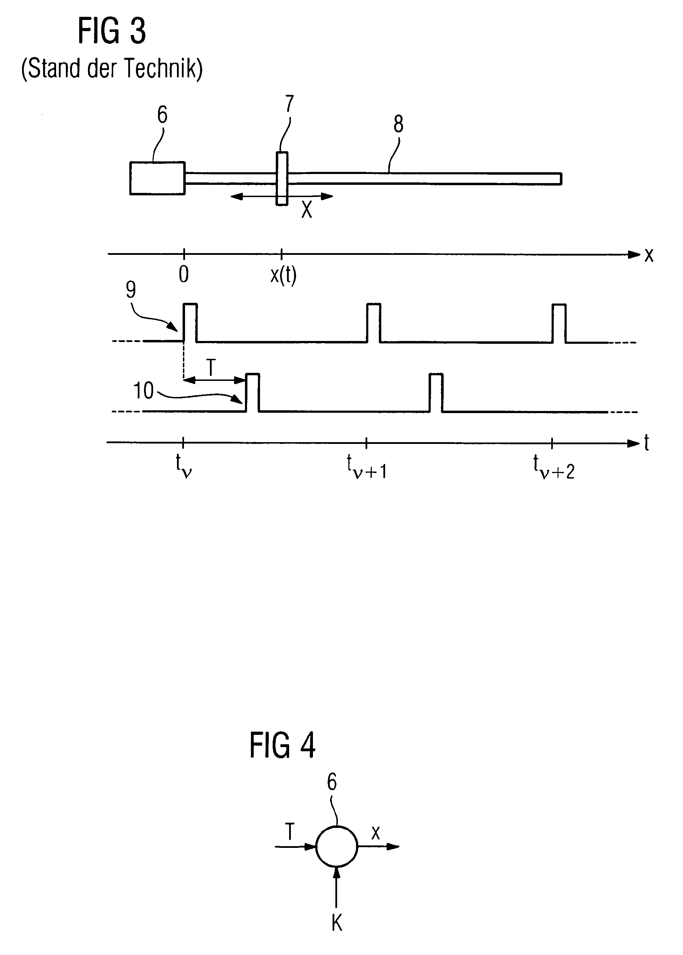

In FIG 3 ist das Prinzip von handelsüblichen magnetostriktiven Lagemesssystemen dargestellt. Ein Magnet, der vorzugsweise als ringförmiger Permanentmagnet 7 ausgebildet ist, wird dabei entlang eines Messstabes 8, der durch den Permanentmagneten 7 geführt ist, längs der Bewegungsrichtung X bewegt. Eine Sensorelektronik 6 bestimmt dabei die Lage x(t), d.h. die Position des Permanentmagneten 7. Hierzu erzeugt die Sensorelektronik 6 in einem festen Taktraster (z.B. eine Millisekunde) Startimpulse 9, die den Messstab 8 als Stromimpulse durchlaufen. An der Position des Permanentmagneten erzeugt das vom Stromimpuls mitgeführte magnetische Feld eine mechanische Torsion im Messstab 8, die innerhalb des Messstabs 8 eine Körperschallwelle erzeugt, die zur Sensorelektronik 6 zurückläuft. Das Eintreffen dieser Körperschallwelle wird in der Sensorelektronik 6 registriert und in einen Stoppimpuls 10 umgesetzt. Dabei ist die zeitliche Differenz T zwischen Startimpuls (entspricht Ereignis A) und dem zugehörigen Stoppimpuls (entspricht Ereignis B) proportional zur Lage x(t) des Permanentmagneten 7.

Zur Ermittlung der Lage x des Permanentmagneten 7 zum Zeitpunkt $t_v$ (Eintritt Ereignis A) wird die zeitliche Differenz T mit einer Konstanten K, mittels eines Multiplizierers 6, multipliziert, wobei die Konstante K sich aus der Geschwindigkeit der Körperschallwelle im Messstab 8 unter Vernachlässigung der Laufzeit der elektrischen Startimpulse 9 ergibt.

Die Lage x des Permanentmagneten 7 zum Zeitpunkt $t_v$ ergibt sich somit zu

$$x = K \cdot T$$

Insbesondere bei magnetostriktiven Lagemesssystemen ist dabei die zu ermittelnde zeitliche Differenz T zwischen dem Startimpuls, welcher gemäß FIG 1 und zugehöriger Beschreibung das erste Ereignis A darstellt und dem zugehörigen Stoppimpuls, welcher gemäß FIG 1 das zweite Ereignis B darstellt, sehr klein. Deshalb eignet sich im besonderen Maße die Verwendung der Erfindung bei magnetostriktiven Lagemesssystemen, da wie schon gesagt die zu messende zeitliche Differenz T zwischen den beiden Ereignissen sehr klein ist und folglich zur Messung der zeitlichen Differenz bei handelsüblichen magnetostriktiven Lagemesssystemen, wenn eine hohe Auflösung der zeitlichen Messung erzielt werden soll, zur Zeitmessung eine hohe Rechteckimpulssignalfrequenz (100 MHz und höher) notwendig ist. Dieses bei handelsüblichen magnetostriktiven Lagemesssystemen notwendige hochfrequente Taktsignal stellt aber eine elektromagnetische Störquelle dar, die insbesondere z.B. die empfindliche Sensorelektronik 6, gemäß FIG 3 des magnetostriktiven Lagemesssystems stört. Mit Hilfe der Erfindung, sind bei entsprechend gleicher zeitlicher Auflösung nur die relativ niederfrequenten (z.B. 0,5 MHz und niedriger) periodischen Signale $x_1(t)$ und $x_2(t)$ notwendig, die infolge ihrer erheblich niedrigeren Frequenz und ihrer Sinusform anstatt Rechteckform erheblich weniger elektromagnetische Störungen erzeugen.

Die von der notwendigen Zeitmessung herrührenden Störungen können somit durch die Erfindung reduziert werden.

Selbstverständlich kann die Erfindung jedoch auch bei anderen Typen von auf der Messung einer Laufzeit beruhenden Lagemesssystemen d.h. bei anderen Typen von auf der Messung einer Laufzeit beruhenden Lagemesseinrichtungen eingesetzt werden.

Magnetostriktive Lagemesssysteme sind z.B. aus der US 5 334 933, US 3 898 555 und der EP 0 442 985 B1 bekannt. Weiterhin sind magnetostriktive Lagemesssysteme aus dem Buch "Lineare Weg- und Abstandssensoren", 2004, ISBN 3-937889-07-8, Seiten 53 bis 66 bekannt. Weiterhin sind magnetostriktive Lagemesssystem z.B. aus einem Faltblatt "Magnetostriktion, Physikalische Grundlagen" der Firma MTS Sensors, welches auf der Internetseite www.mtssensor.de/fileadmin/medien/downloads/ mts_messprinzip.pdf offenbart ist, bekannt.

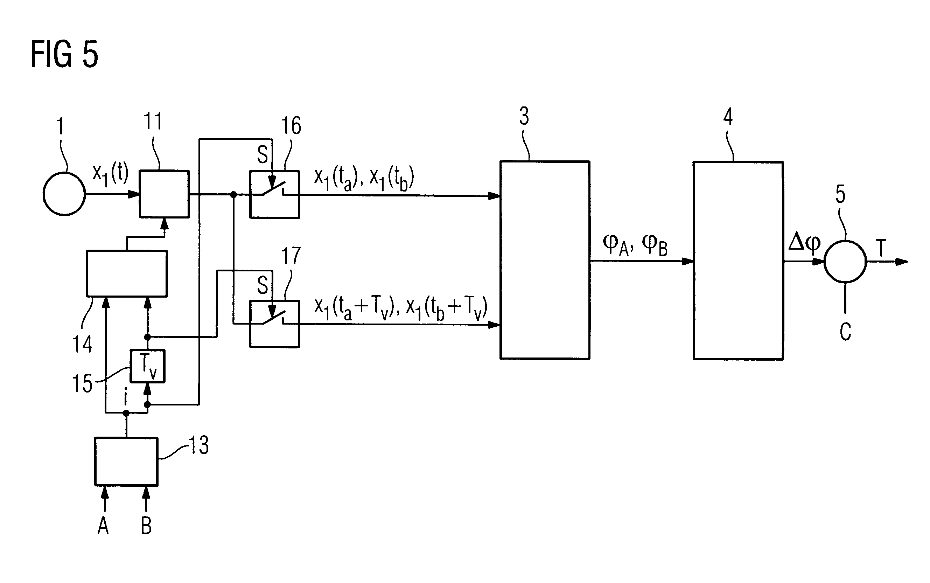

In FIG 5 ist ein weiteres Ausführungsbeispiel der Erfindung dargestellt. Die in FIG 5 dargestellte Ausführungsform entspricht im Grundaufbau und von der Funktionsweise im Wesentlichen der vorstehend in FIG 1 beschriebenen Ausführungsform. Gleiche Elemente sind daher daher in FIG 5 mit den gleichen Bezugszeichen versehen wie in FIG 1. Der wesentliche Unterschied besteht darin, dass bei der Ausführungsform gemäß FIG 5 nur ein erstes periodisches Signal $x_1(t)$ und folglich auch nur ein erster Signalgenerator 1 benötigt wird um die zeitliche Differenz T zu ermitteln. Gegenüber der Ausführungsform gemäß FIG 1 wird die in FIG 1 dargestellte Schaltung um ein weiters logischen ODER-Gatters 14, dass eine logische ODER-Verknüpfung seiner Eingangsignale durchführt, sowie um einen zeitlichen Verzögerer 15, der eine zeitliche Verzögerung seines Eingangsignal um die Zeitdauer $T_V$ durchführt, und um zwei Schalter 16 und 17 erweitert.

Das Signal $x_1(t)$ wird als Eingangsgröße dem Analog-Digital-Wandlern 11 zugeführt. Bei Einritt eines ersten Ereignisses A und bei Einritt eines zweiten Ereignisses B wird am Ausgang des logischen ODER-Gatters 13, jeweils ein Tastimpuls i erzeugt, der über das ODER-Gatters 14 weitergeleitet wird und den Analog-Digitalwandler 11 dazu veranlasst jeweils eine einmalige Abtastung des analogen Signals $x_1(t)$ durchzuführen. Der Eintritt des ersten Ereignisses A und des zweiten Ereignisses B wird dabei dem ODER-Gatters 13 in Form eines jeweiligen Triggerimpulses als Eingangsgröße zugeführt.

Die Analog-Digital-Wandler 11 erzeuget solchermaßen den zum Zeitpunkt $t_a$ des Einritts des ersten Ereignisses A abgetasteten Signalwert $x_1(t_a)$ und den zum Zeitpunkt $t_b$ des Einritts des zweiten Ereignisses B abgetasteten Signalwert $x_1(t_b)$. Durch den zeitlichen Verzögerer 15 wird der Analog-Digital-Wandler 11 aber nach jedem Einritt eines Ereignisses dazu veranlasst eine weitere um die Zeitdauer $T_V$ zeitlich versetzte Abtastung durchzuführen und solchermaßen die Signalwerte $x_1(t_a+T_V)$ und $x_1(t_b+T_V)$ ausgangsseitig zu erzeugen. Mittels der Schalter 16 und 17 werden die Signalwerte $x_1(t_a)$, $x_1(t_a+T_V)$, $x_1(t_b)$ und $x_1(t_b+T_V)$ an die Messsignalauswertung 3 als Eingangswerte ausgegeben, wobei die Schalter 16 und 17 ihr Eingangssignal auf ihren Ausgang durchschalten, wenn an ihrem Steuereingang S eine logische "1" auftritt.

Der Signalwert $x_1(t_a+T_V)$ entspricht dabei dem Signalwert $x_2(t_a)$ gemäß FIG 1 und der Signalwert $x_1(t_b+T_V)$ entspricht dabei dem Signalwert $x_2(t_b)$ gemäß FIG 1. Ansonsten entspricht die Funktionsweise der Ausführungsform gemäß FIG 5 der Funktionsweise der Ausführungsform gemäß FIG 1.

**Patentansprüche**

1. Verwendung einer Messsignalauswertung (3) einer Lagemesseinrichtung zur Ermittelung der zeitlichen Differenz (T) zwischen einem ersten Ereignis (A) und einem zweiten Ereignis (B), wobei aus einem einzelnen oder mehreren

periodischen Signalen ($(x_1(t),x_2(t)$) Lagewerte ermittelt werden, wobei bei Eintritt eines ersten Ereignisses (A) ein erster Lagewert ($\varphi_A$) mittels der Messsignalauswertung (3) ermittelt wird und bei Eintritt des zweiten Ereignisses (B) ein zweiter Lagewert ($\varphi_B$) mittels der Messsignalauswertung (3) ermittelt wird, wobei mittels des ersten und des zweiten Lagewerts ($\varphi_A$, $\varphi_B$) die zeitliche Differenz (T) ermittelt wird.

2. Verwendung nach Anspruch 1, **dadurch gekennzeichnet, dass** die zeitliche Differenz (T) ermittelt wird, indem die Lagedifferenz ($\Delta\varphi$) zwischen dem erstem Lagewert ($\varphi_A$) und dem zweitem Lagewert ($\varphi_B$) ermittelt wird und die Lagedifferenz ($\Delta\varphi$) mit einem Proportionalitätsfaktor (C) gewichtet wird.

3. Verwendung nach einem der vorhergehenden Ansprüche, **dadurch gekennzeichnet, dass** das periodische Signal mittels eines dem periodischen Signal ($x_1(t)$) zugeordneten Signalgenerators (1) erzeugt wird oder die periodischen Signale (($x_1(t),x_2(t)$) mittels den periodischen Signalen (($x_1(t),x_2(t)$) zugeordneter Signalgeneratoren (1,2) erzeugt werden.

4. Verwendung nach einem der vorhergehenden Ansprüche, **dadurch gekennzeichnet, dass** das periodische Signal ($x_1(t)$) oder die periodischen Signale (($x_1(t)$, $x_2(t)$) ausschließlich bei Eintritt des ersten (A) und Eintritt des zweiten Ereignisses (B), zur Erzeugung von Eingangswerten ($x_1(t_a)$, $x_2(t_a)$ ,$x_1(t_b)$, $x_2(t_b)$) für die Messsignalauswertung (3), abgetastet werden.

5. Verwendung nach einem der vorhergehenden Ansprüche, **dadurch gekennzeichnet, dass** die solchermaßen ermittelte zeitliche Differenz (T) zur Bestimmung der Lage (x) eines beweglichen Magneten bei einem magnetostriktiven Lagemesssystem verwendet wird.

6. Lagemesssystem, wobei das Lagemesssystem eine Messsignalauswertung (3) zur Ermittelung der zeitlichen Differenz (T) zwischen einem ersten Ereignis (A) und einem zweiten Ereignis (B) aufweist, wobei aus einem einzelnen oder mehreren periodischen Signalen (($x_1(t)$, $x_2(t)$) Lagewerte ermittelbar sind, wobei bei Eintritt eines ersten Ereignisses (A) ein erster Lagewert ($\varphi_A$) mittels der Messsignalauswertung (3) ermittelbar ist und bei Eintritt des zweiten Ereignisses (B) ein zweiter Lagewert ($\varphi_B$) mittels der Messsignalauswertung (3) ermittelbar ist, wobei mittels des ersten und des zweiten Lagewerts ($\varphi_A$, $\varphi_B$) die zeitliche Differenz (T) ermittelbar ist.

EP 2 128 570 A1

## FIG 1

## FIG 2
(Stand der Technik)

$$x_2(t) = D \cos \varphi$$

$$x_1(t) = D \sin \varphi$$

$$\varphi = \omega t$$

$$q = 15$$

$$\omega T$$

## FIG 3
(Stand der Technik)

## FIG 4

FIG 5

EP 2 128 570 A1

Europäisches
Patentamt

European
Patent Office

Office européen
des brevets

## EUROPÄISCHER RECHERCHENBERICHT

Nummer der Anmeldung

EP 08 00 9649

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | DE 10 2004 038621 B3 (SIEMENS AG [DE]) 16. Februar 2006 (2006-02-16) * das ganze Dokument * ----- | 6 | INV. G01D5/244 |
| A | US 6 289 294 B1 (RATAJ DAVID H [US] ET AL) 11. September 2001 (2001-09-11) * Zusammenfassung * * Ansprüche * ----- | 1-6 | |
| A | WO 2008/015229 A (CONTINENTAL TEVES AG & CO OHG [DE]; LOHBERG PETER [DE]; RINK KLAUS [DE] 7. Februar 2008 (2008-02-07) * Zusammenfassung * * Abbildung 2 * * Ansprüche * ----- | 1-6 | |
| D,A | US 3 898 555 A (TELLERMAN JACOB) 5. August 1975 (1975-08-05) * das ganze Dokument * ----- | 5 | |

RECHERCHIERTE
SACHGEBIETE (IPC)

G01D
G01B

Der vorliegende Recherchenbericht wurde für alle Patentansprüche erstellt

| Recherchenort | Abschlußdatum der Recherche | Prüfer |
|---|---|---|
| Den Haag | 3. Dezember 2008 | Moulara, Guilhem |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 00 9649

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-12-2008

| Im Recherchenbericht angeführtes Patentdokument | Datum der Veröffentlichung | Mitglied(er) der Patentfamilie | Datum der Veröffentlichung |
|---|---|---|---|
| DE 102004038621 B3 | 16-02-2006 | WO 2006015948 A1<br>JP 2008509414 T<br>US 2007288187 A1 | 16-02-2006<br>27-03-2008<br>13-12-2007 |
| US 6289294 B1 | 11-09-2001 | KEINE | |
| WO 2008015229 A | 07-02-2008 | DE 102007036463 A1 | 28-02-2008 |
| US 3898555 A | 05-08-1975 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004038621 B3
- DE 2729697 A1
- US 5334933 A
- US 3898555 A
- EP 0442985 B1

**In der Beschreibung aufgeführte Nicht-Patentliteratur**

- *Lineare Weg- und Abstandssensoren,* 2004, ISBN 3-937889-07-8, 53-66